# EUROPEAN PATENT APPLICATION

(11) **EP 4 095 778 A1**
(43) Date of publication of application: **30.11.2022**
(21) Application number: 22165762.0
(22) Date of filing: 31.03.2022
(51) Int. Cl.: G06Q 10/08, G06Q 10/06

(54) **METHODS AND APPARATUS TO PLAN MULTI-VEHICLE DATA COLLECTION**

(30) Priority: 28.05.2021 US 202163194779 P; 01.09.2021 US 202117464376
(71) Applicant: Nielsen Consumer LLC, New York, NY 10004 (US)
(72) Inventor: Balaji, Kannan, Tampa, 33626 (US); RAMASWAMY, Arun, Tampa, 33636 (US)
(74) Representative: Samson & Partner Patentanwälte mbB

(57) **Abstract**

Methods, apparatus, systems disclosed herein include a work plan generator to generate market vehicle scores corresponding to available market vehicles, the market vehicle scores based on at least one client weight and at least one vehicle metric, and perform a comparison of the market vehicle scores associated with vehicle types to determine a first vehicle assignment and a second vehicle assignment, the first vehicle assignment associated with a first vehicle type, the second vehicle assignment associated with a second vehicle type; and generate first work plans, the first work plans corresponding to (a) a sequence of tasks and (b) a set of corresponding vehicles to execute the sequence of tasks, and a vehicle metrics generator to update vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

## Description

### FIELD OF THE DISCLOSURE

This disclosure relates generally to data collection and, more particularly, to methods and apparatus to plan multi-vehicle data collection.

### BACKGROUND

Data collection is utilized by some businesses to learn about their customers improve, on-hand inventory, business operations, etc. Such data collection may include gathering and measuring information based on variables of interest such as, for example, stock levels, product prices, planogram compliance (e.g., shelf location, inaccurate shelf tags), location of products, product damage, etc. To execute data collection, businesses may consult other companies (e.g., research companies) to gather and measure the information utilizing vehicles. Such vehicles may include auditors, employees, technology, etc.

### BRIEF DESCRIPTION OF THE DRAWINGS

FIG. 1 is an illustration of an example data collection system constructed in a manner consistent with this disclosure to plan multi-vehicle data collection.
FIG. 2 is a flowchart representative of an example process that may be performed using machine-readable instructions that may be executed and/or hardware configured to implement the example data collection system of FIG. 1.
FIG. 3 is a flowchart representative of the example process 210 of FIG. 2 to generate a work order by a work order planner.
FIG. 4 is a flowchart representative of the example process 225 of FIG. 2 to generate work plans by a work order executor.
FIG. 5 is a block diagram of an example processing platform structured to execute the instructions of FIGS. 2-4 to implement the example data collection system of FIG. 1.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name.

### DETAILED DESCRIPTION

Some businesses may utilize data collection systems to collect data to obtain information about their customers, and/or inventory in an effort to improve business operations, maintain product stock, etc. Such data collection systems allow businesses to request data collection activities such as, for example, gathering data regarding product stock levels, product prices, planogram compliance of stores and/or products (e.g., shelf location, inaccurate shelf tags), location of products, product damage in stores, etc.

The data collection systems may include more than one company at different geographic locations, retailers, store types, etc. to execute the data collection activities. For example, a company may determine vehicles to execute data collection activities in a specified geographic location (e.g., a metropolitan area, a state, etc.), a specified store (e.g., Walmart@), a specified store type (e.g., clothing store, grocery store), etc. The vehicles may include traditional auditing techniques such as, for example, auditors (e.g., personnel) collecting data from stores, self-collection for stores via store employees, , etc. Additionally, vehicle types may include technological devices (e.g., a drone, a robot, a point of sale terminal, etc.).

However, the determination of which particular vehicles to execute the data collection activities may vary based on the company choosing the vehicles. A company may assign data collection activities to vehicles based on a store manager or any other user deciding vehicle assignments. As a result, the vehicle assignment process may be biased and/or otherwise inconsistently administered due to human discretion. Additionally, market and store characteristics such as, for example, shelf height, aisle width, store size, stock amount, etc. further impact vehicle assignment and selection. For example, if a store has a high shelving unit, data collection via a drone type vehicle may be more optimal than using a vehicle of a human type. As a result, the vehicle assignment process may be complicated considering multiple vehicle types, varying store characteristics, as well as the type of data collected.

The business or retailer utilizing the data collection system may have client preferences for the data collection activities such as, for example, resource distribution preferences (e.g., preference over vehicle types and/or vehicle quantities), client-specific vehicle metrics (e.g., quality metrics, efficiency metric, and compliance metrics), previous data collection activity feedback, etc. However, the client preferences for the business may be handled or considered differently based on the company assigning the vehicles.

Examples disclosed herein improve the technical field of data collection, workflow management, and the technological tools associated therewith. Examples disclosed herein implement a data collection system to consistently plan multi-vehicle data collection across different companies, while considering vehicle metrics, vehicle availability, client preferences, and market characteristics. Additionally, the data collection system updates vehicle metrics and client preferences for future data collection activities. Such data collection systems consistently plan multi-vehicle data collection across companies performing data collection activities, motivates vehicle options to improve performance absent of company bias, and provides up-to-date vehicle metrics and client preferences.

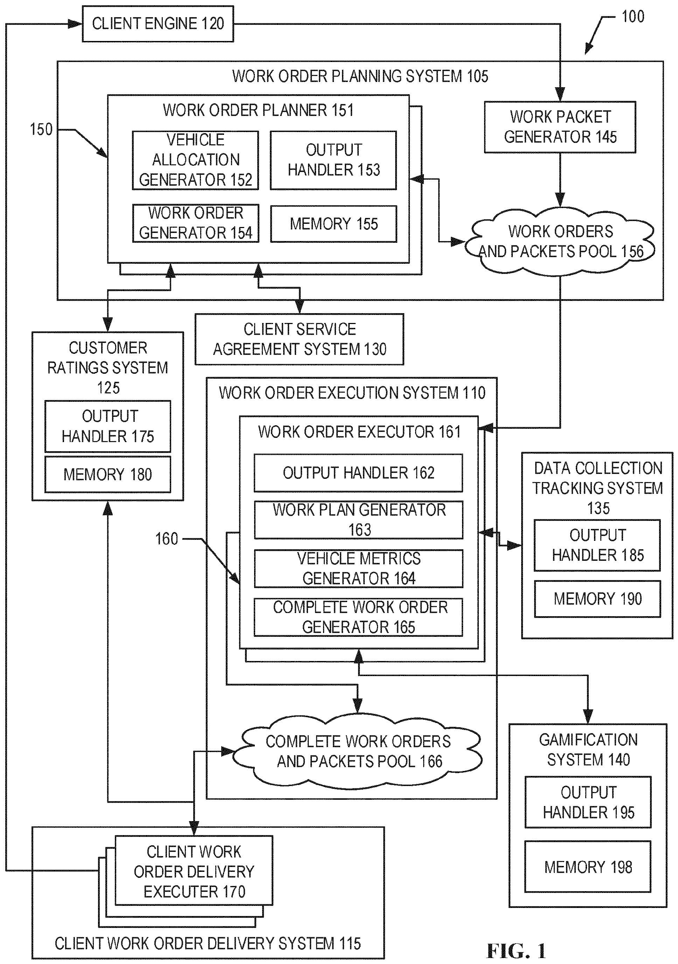

FIG. 1 is an illustration of an example data collection system 100 constructed in a manner consistent with the teachings of this disclosure to plan multi-vehicle data collection. The example data collection system 100 of the illustrated example includes a work order planning system 105, a work order execution system 110, a client work order delivery system 115, a client engine 120, a customer ratings system 125, a client service agreement system 130, a data collection tracking system 135, and a gamification system 140.

The example work order planning system 105 also includes a set of one or more work order planners 150, an example work packet generator 145, and a work orders and packets pool 156. An example work order planner 151 from the set of work order planners 150 includes a vehicle allocation generator 152, an output handler 153, a work order generator 154, and memory 155. In the examples disclosed herein, the work order planner(s) 151 are substantially similar to one another in the set of work order planner(s) 150. As shown in FIG. 1, the example work order execution system 110 also includes a set of one or more work order executors 160 and a complete work orders and packets pool 166. In the illustrated example of FIG. 1, a work order executor 161 from the set of work order executors 160 includes an output handler 162, a work plan generator 163, a vehicle metrics generator 164, and a complete work order generator 165. Additionally, the example work order executor 161 may include memory such as, for example, one or more cache(s), random-access memory(s), hard disk drive(s), flash memory(s), read-only memory(s), compact disk(s), digital versatile disk(s), etc. The example client work order delivery system 115 includes any number of client work order delivery executors 170.

The example customer ratings system 125 includes an output handler 175 and memory 180. The example data collection tracking system 135 includes an output handler 185 and memory 190. The example gamification system 140 includes an output handler 195 and memory 198.

The example client engine 120, the example client service agreement system 130, the example work packet generator 145, and/or the client work order delivery executor(s) 170, may be implemented by hardware, software, firmware and/or any combination of hardware, software and/or firmware. In such examples, the client engine 120, the client service agreement system 130, the work packet generator 145, and/or the client work order delivery executor(s) 170, may be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)), field programmable logic device(s) (FPLD(s)) (such as field programmable gate arrays (FPGAs)), Coarse Grained Reduced precision architecture (CGRA(s)), image signal processor(s) (ISP(s)), etc. Additionally, the client engine 120, the client service agreement system 130, the work packet generator 145, and/or the client work order delivery executor(s) 170, may include at least one memory including cache(s), random-access memory(s), hard disk drive(s), flash memory(s), read-only memory(s), compact disk(s), digital versatile disk(s), etc.

The example vehicle allocation generator 152, the example work order generator 154, the example work plan generator 163, the example vehicle metrics generator 164, the example complete work order generator 165, and/or the example output handlers 153, 162, 175, 185, 195 may be implemented by one or more logic circuits such as, for example, hardware processors. However, any other type of circuitry may additionally or alternatively be used such as, for example, one or more analog or digital circuit(s), logic circuits, programmable processor(s), programmable controller(s), GPU(s), DSP(s), ASIC(s), PLD(s), FPLD(s) (such as (FPGAs)), CGRA(s), ISP(s), etc.

The example memories 155, 180, 190, 198 may be implemented by at least one memory including cache(s), random-access memory(s), hard disk drive(s), flash memory(s), read-only memory(s), compact disk(s), digital versatile disk(s), etc.

The example work orders and packets pool 156 and/or the example complete work orders and packets pool 166 may be implemented by one or more cloud storages. Alternatively, the work orders and packets pool 156 and/or the complete work orders and packets pool 166 may be one or more storage devices and/or computing devices (e.g., servers) located at the same or different locations of a network or collection of networks (e.g., in the cloud, in edge devices) that may be accessed by the work order planning system 105, the work order execution system 110, and/or the client work order delivery system 115.

In some examples, the client engine 120 is associated with a client (e.g., a company, corporation, a retailer, etc.) that requests data collection from the example data collection system 100. A client request may be an input to the client engine 120 and include task instructions (e.g., data collection information) to gather information corresponding to at least one target market, and/or service level agreement(s). For example, the task instructions may include a client request to perform a task such as measure product information (e.g., stock levels, prices, planogram compliance, location, damage, etc.) in a store associated with that client. Further, the task instructions may include a client request to have measurements taken over a specified time period, date, time of day, etc. and/or at a specified frequency (e.g., every day, once per month, etc.). In some examples, the task instructions may include a target market such as, for example, a geographic location (e.g., a city, a suburb, a metropolitan area), a store type (e.g., a Walmart@, a supermarket, a collections of stores), etc. for which to collect the data. In some examples, the service level agreement(s) corresponding to the client may include resource distribution preferences and/or one or more weights associated with the preferences. The resource distribution preferences may be a vehicle allocation including vehicle quantities corresponding to one or more vehicle types (e.g., twenty auditors, ten drones, etc.) used to complete the task instructions. For example, the vehicle allocation defines a first vehicle quantity corresponding to a first vehicle type, a second vehicle quantity corresponding to a second vehicle type, etc. The client preference weight(s) may be a unitless ratio for indicating importance of vehicle metrics preferences to the client such as, for example, quality metrics, efficiency metrics, and/or compliance metrics. In one example, the vehicle metrics preferences may be rated on a scale from 0-10, for example, where 0 is indicative of least importance and 10 is indicative of greatest importance increasing by increments of 1. In some examples, the vehicle metrics are represented as a unitless ratio such as quality metrics rating : efficiency metrics rating : compliance metrics rating, and the client weight may be provided as, for instance, 5:7:9. In some examples, the vehicle metrics preferences may include more or fewer preferences than those disclosed herein and/or a different scale.

In some examples, the work packet generator 145 communicates with the client engine 120 to obtain (e.g., receive or retrieve) the client request including the task instructions, the at least one target market, and/or the service level agreement(s) (e.g., resource distribution preferences and/or client weight). The work packet generator 145 generates a work packet based on the client request. The work packet may include a client identifier (e.g., client code, a unique number, etc.), a work packet identifier (e.g., work packet code, a unique number, etc.), the task instructions, the at least one target market, and/or the service level agreement(s) (e.g., resource distribution preferences and/or client weight). In some examples, the work packet generator 145 sends the work packet to the work orders and packets pool 156 for future evaluation. The output handler 153 of the work order planner 151 accesses the work packet from the work orders and packets pool 156. In some examples, the output handler 153 accesses the work packet in response to an instruction notifying the work order planner 151 that the work packet is available in the work orders and packets pool 156. The instruction may be from the work orders and packets pool 156 or any other element. Alternatively, the work order planner 151 may periodically check the work orders and packets pool 156 for available or newly generated work packets.

In some examples, the work order generator 154 generates a work order to provide instructions for the one or more work order executors 161 to carry out the task instructions defined in the work packet. A work order executor 161 may be an entity such as, for example, a company that includes vehicles (e.g., auditors, drones, robots, etc.) to perform data collection in a location associated with the target market. In some examples, a work order may be utilized by more than one work order executors 161. For instance, a work packet includes task instructions to collect data at a target market associated with three locations (e.g., a target market associated with department stores in Chicago, Detroit, and Houston). As a result, three work order executors may be called to complete the work packet, where one work order executor is associated with each of the three locations.

In some examples, the work order is generated based on the work packet, the memory 155, the customer ratings system 125, and/or the client service agreement system 130. In some examples, the memory 155 stores a set of work order executor identifiers (e.g., client code, a unique number, etc.) corresponding to the set of work order executors 160 to perform data collection activities. In some examples, the customer ratings system 125 stores information in the memory 180 associated with completed work packets including data from a work packet executed by at least one work order executor. Such data may include a client identifier, task instructions, target market, client feedback, vehicle allocation, etc. In some examples, the client feedback is previous data collection activity feedback from the completed work packet. For example, the client feedback includes a feedback rating represented as a score of how satisfied a client was with the completed work packet. As such, the client feedback may be based on the feedback received and/or provided by client or client representative following completion of one or more work orders and/or may be based on feedback received from previously planned and executed work orders. In some examples, the client service agreement system 130 stores information associated with default preferences of clients. The default preferences may include resource distribution preferences (e.g., vehicle allocation) and/or a client weight.

The work order may include at least one work order executor identifier to identify the executor of the work order (e.g., work order executor code, unique number, etc.), a vehicle allocation, a client weight, and/or information from the work packet (e.g., a client identifier, work packet identifier, task instructions, etc.). The work order executor identifier(s) (e.g., work order executor code, unique number, etc.) included in the work order may be selected by the work order generator 154. In some examples, the work order generator 154 accesses the memory 155 to select the at least one work order executor identifier based on the at least one target market included in the work packet. The work order executor identifier(s) may be from a set of work order executor identifiers stored in the memory 155, the set of work order executor identifiers corresponding to the set of work order executors 160 to perform data collection activities. For example, the at least one target market includes a type of store in three locations. As a result, the work order generator 154 may select three work order executor identifiers corresponding to three work order executors (e.g., three companies) including vehicles (e.g., auditors, robots, drones, etc.) to perform data collection in the respective locations.

In some examples, the vehicle allocation generator 152 determines vehicle allocation of the work order. In some examples, the vehicle allocation generator 152 determines a new or updated vehicle allocation from client feedback including previous vehicle allocations based on the customers ratings system 125 (e.g., a first data type), vehicle allocation data from the client service agreement system 130 (e.g., a second data type), and/or vehicle allocation data included in the work packet (e.g., a third data type). In some examples, the vehicle allocation generator 152 sends a request for client feedback to the customers ratings system 125 to obtain client feedback indicative of previous vehicle allocations. The output handler 175 of the customer ratings system 125 may receive the request for client feedback and read the memory 180 of the customer ratings system 125 to determine whether similar work packets already completed (e.g., same client identifier, same task instructions, and/or the at least one same target market as the work packet) include client feedback and corresponding vehicle allocations. In some examples, the client feedback includes previous data collection activity feedback from previously completed work packets (e.g., work orders, etc.) and/or a separate manual feedback provided by the client or client representatives. For example, a completed work packet may include the same client identifier, same task instructions, and/or the same target market as the work packet. As such, the corresponding completed work packet may include vehicle allocation data based on received client feedback such as, for example, a feedback rating (e.g., five stars, a numerical score, etc.,). The feedback rating may be a score of how satisfied a client was with the completed work packet. The output handler 175 may send the client feedback including the vehicle allocation data associated with corresponding completed work packets to the vehicle allocation generator 152.

In some examples, the vehicle allocation generator 152 sends a client agreement information request for resource distribution preferences including vehicle allocation data to the client service agreement system 130. For example, the request for resource distribution preferences (e.g., the second vehicle allocation data set) is sent in cases when resource distribution preferences are not included in the service level agreement(s) of the work packet. The request may also include the client identifier from the work packet. The client service agreement system 130 receives the request and determines whether default resource distribution preferences are associated with the client identifier. The client service agreement system 130 may send the vehicle allocation data corresponding to the default resource distribution preferences from the client service agreement system 130 to the vehicle allocation generator 152.

Alternatively, no vehicle allocation may be generated for the work order if the customers ratings system 125 does not include client feedback with vehicle allocations corresponding to previously completed work packets having at least one similar characteristic. In such circumstances, the client service agreement system 130 does not include vehicle allocation data corresponding to the default resource distribution preferences, and the work packet does not include any vehicle allocations. For example, the customers ratings system 125 does not include client feedback with vehicle allocation data corresponding to similar completed work packets (e.g., the first data type) in cases where there are no similar completed work packets (e.g., same client identifier, same task instructions, and/or the at least one same target market). In some examples, the client service agreement system 130 does not include the vehicle allocation data corresponding to the default resource distribution preferences (e.g., the second data type) in cases where the client does not have a default preference on the vehicle types performing data collection for the client. In other examples, the work packet does not include the vehicle allocation data (e.g., the third data type) in cases where the client does not have a default preference on the vehicle types performing the data collection for the work packet.

The client weight included in the work order may be obtained by the work order generator 154. In some examples, the vehicle allocation generator 152 sends a request for a client weight to the client service agreement system 130. For example, the request for client weight is sent in cases where the service level agreement included in the work packet does not include a client weight. The service level agreement may not include the client weight in cases where the client does not have a preference on the vehicle metrics of vehicles performing the data collection for the work packet. Additionally, the request may include the client identifier included in the work packet. The client service agreement system 130 receives the request and determines whether a client weight is associated with the client identifier. Alternatively, the client service agreement system 130 may include no client weight associated with the client identifier in cases where the client does not have default preferences for client weight.

The work order generator 154 extracts information from the work packet such as, for example, the client identifier, the work packet identifier, the task instructions, for example, to include in the work order.

The output handler 153 of the work order planner 151 sends the work order to the work orders and packets pool 156 in response to the generation of the work order, as well as in response to the work order generator 154 selecting the at least one work order executor identifier, the vehicle allocation generator 152 determining the vehicle allocation, the work order generator 154 obtaining a client weight, and/or the work order generator 154 extracting information from the work packet. The output handler 162 of the work order executor 161 from the set of work order executors 160 accesses the work order from the work orders and packets pool 156 based on the work order executor identifier included in the work order. In some examples, the output handler 162 accesses the work order in response to an instruction notifying the work order executor 161 that the work order is available in the work orders and packets pool 156. The instruction may be from the work orders and packets pool 156 or any other element. Alternatively, the work order executor 161 may periodically check the work orders and packets pool 156 for work orders including the work order executor identifier corresponding to the work order executor 161. In some examples, a plurality of work order executors from the set of work order executors 160 obtains (e.g., receive, retrieve, etc.) the work order from the work orders and packets pool 156. For instance, one or more work orders including a plurality of work order executor identifiers are sent to the plurality of work order executors corresponding to the work order executor identifiers. As such, the output handler 162 provides the work orders to the work plan generator 163 for evaluation.

In some examples, the work plan generator 163 of the work order executor 161 determines a new vehicle allocation corresponding to market vehicles available to perform data collection for the work order executor 161 and market characteristics (e.g., shelf height, aisle width, etc.) of at least one store associated with the target market (e.g., Walmart@ stores in Detroit) of the work order executor 161. In some examples, the data collection tracking system 135 stores the market vehicles of the work order executor 161, the market vehicle statuses (e.g., available or unavailable), and/or the market characteristics of stores associated with the target markets corresponding to the work order executor 161 in the memory 190. In some examples, the output handler 185 notifies the work plan generator 163 that a vehicle has changed a status of operation (e.g., a drone has low battery and is no longer available for use, a new auditor is available, etc.). The new vehicle allocation is determined based on the vehicle allocation included in the work order, market characteristics corresponding to the at least one store associated with the target market, and/or available market vehicles. Thus, in some examples, the output handler 185 facilitates a change in a vehicle assignment for a particular work order executor 161. In some examples, the work plan generator 163 sends a tracking request to the data collection tracking system 135 for the market characteristics and/or the available market vehicles. The output handler 185 of the data collection tracking system 135 may receive the tracking request and read the memory 190 of the data collection tracking system 135. For example, the output handler 185 records market characteristics corresponding to the at least one store associated with the target market based on the memory 190. Additionally, the output handler 185 may identify and record available market vehicles (e.g., market vehicles associated with available statuses) and/or a change in vehicle status from the market vehicles of the work order executor 161 based on the memory 190. The output handler 185 of the data collection tracking system 135 sends the market characteristics and/or the available market vehicles to the work order executor 161. Thus, the output handler 185 forms a means for identifying a status associated with a market vehicle and/or facilitate a change in vehicle assignments based on an availability of the market vehicle.

In some examples, the work plan generator 163 determines the new vehicle allocation based on the vehicle allocation included in the work order, the market characteristics and/or the available market vehicles. In some examples, the vehicle allocation included in the work order includes five auditors (e.g., personnel), whereas the available market vehicles include four auditors. As a result, the new vehicle allocation may include no more than four auditors based on the available vehicles. In other examples, the vehicle allocation included in the work order includes only human type vehicles, however the market characteristics of a store associated with the target market includes high shelving units. As a result, the new vehicle allocation may include vehicles of a drone type to easily collect data at the higher shelving locations in contrast to vehicles of a human type that may need to climb ladders thus improving the efficiency and efficacy at which data is collected. In particular, the use of advanced technology, such as ariel-based vehicles (e.g., drones) and/or robots, may be more effective for data collection in stores absent of customers (e.g., warehouses) in contrast to stores with customers (e.g., grocery stores and retail stores) due to the likelihood of customers interfering with the advanced technology. In such circumstances, vehicle type selection promotes and/or otherwise enhances workplace safety. For instance, in sparsely populated locations, ariel-based vehicles such as, for example, drones reduce and/or minimize a need of human personnel climbing ladders to conduct data collection tasks. In some examples, a reduction in workplace danger promotes reduced insurance rates, workman's compensation claims, etc. In other examples, a warehouse may include high shelving units in some areas and narrow aisles in other areas, thereby requiring the use of multiple types of vehicles (e.g., three human auditors, and one drone, etc.). Alternatively, in some examples, the new vehicle allocation is the same as the vehicle allocation included in the work order. The new vehicle allocation may be the same as the vehicle allocation included in the work order in cases where the vehicle allocation corresponds to the market characteristics and/or the available market vehicles.

The work plan generator 163 generates work plans including sets of task instructions to be executed by vehicle assignments. The work plans are based on the new vehicle allocation and/or the gamification system 140. The gamification system 140 stores vehicle metrics corresponding to the market vehicles in the memory 198. These vehicle metrics may be a unitless ratio for vehicle metrics performance such as, for example, quality metrics, efficiency metrics, and/or compliance metrics. For example, the vehicle metrics performance may be rated on a scale from 0-10 (e.g., the rating options vary from 0 indicative of least satisfactory performance to 10 indicative of greatest satisfactory performance by increments of 1), the vehicle metrics may be represented as a unitless ratio quality metrics rating : efficiency metrics rating : compliance metrics rating, and the first vehicle metrics for a first vehicle may be provided as, for instance, 2:3:5.

In some examples, the work plan generator 163 sends a request to the gamification system 140 to obtain the vehicle metrics corresponding to the available market vehicles. The output handler 195 of the gamification system 140 may receive the gamification request and read the memory 198 of the gamification system 140 to record vehicle metrics corresponding to the available market vehicles. The output handler 195 may send the vehicle metrics to the work order executor 161.

The work plan generator 163 generates market vehicle scores corresponding to the available market vehicles based on the vehicle metrics corresponding to the available market vehicles and/or the client weight included in the work order. In some examples, a decision matrix may calculate market vehicle scores. For example, a client weight is represented as a vector (e.g., a row of digits 5,7,9) (described in connection with the client engine 120), the first vehicle metrics are represented as a vector (e.g., a column of digits 2;3;5). As such, a first market vehicle score is produced by performing matrix multiplication of the client weight row by the vehicle metrics column (e.g., score of 76 ((5x2)+(7x3)+(9x5)=76)). Therefore, in some examples, the client engine 120 indicates a client weight associated with the service level agreement for the particular client forming a means for determining completion of client-specific task instructions. As such, the client engine 120 forms a means for determining completion of one or more tasks (e.g., by a client) and/or identify a service level agreement corresponding to the client.

The work plan generator 163 performs a comparison of market vehicle scores associated with the vehicle types (e.g., a person, drone, robot, etc.) included in the new vehicle allocation. For example, the work plan generator 163 compares market vehicle scores of a first vehicle type, compares market vehicle scores of a second type, etc. For instance, the work plan generator 163 may compare market vehicle scores of a first vehicle type to determine which available market vehicles of the first vehicle type have better (e.g., higher) market vehicle scores. As a result, the work plan generator 163 may rank the available market vehicles of the first vehicle type from best (e.g., highest) market vehicle scores to worst (e.g., lowest) market vehicle scores. The work plan generator 163 determines vehicle assignments based on the new vehicle allocation and/or the determined market vehicle scores. For instance, first available market vehicles of a first vehicle type (e.g., a person, drone, or robot) may be selected as vehicle assignments, rather than second available market vehicles of the first type because the first available market vehicles have better (e.g., higher) market vehicle scores than market vehicle scores of the second available market vehicles. In some examples, the vehicle assignments include a mixture of vehicle types, such as, for example three persons, and five drones. Alternatively, in cases where the quantity of available market vehicles of the first vehicle type are equal to the quantity of the first vehicle type in the new vehicle allocation, the available market vehicles of the first vehicle type are all selected as vehicle assignments.

The work plan generator 163 divides task instructions included in the work order into one or more sets of task instructions. The sets of task instructions are included in corresponding work plans associated with vehicle assignments. These work plans are executed by the corresponding vehicle assignments. For example, a first set of task instructions is included in a first work plan to be completed by a first vehicle assignment, a second set of task instructions is included in a second work plan to be completed by a second vehicle assignment, etc. The work plans are generated based on market vehicle scores and/or the task instructions included in the work order. In some examples, the first vehicle assignment has a better (e.g., relatively higher) market vehicle score than the market vehicle score of the second vehicle assignment. As a result, the work plan generator 163 assigns the first vehicle assignment more task instructions than the second vehicle assignment. For instance, the better (e.g., relatively higher) market vehicle score indicates the first vehicle assignment is to be granted more business (e.g., more business providing more compensation and/or resources for the first vehicle assignment) from the work order executor 161 for relatively better performance than other vehicle assignment options. Thus, the work plan generator forms a means for assigning sets of task instructions to vehicle assignments where the size of the sets is based market vehicle scores corresponding to the vehicle assignments.

The output handler 162 retrieves and/or parses the work plans generated by the work plan generator 163 and provides the work plans to corresponding vehicle assignments to thereby instructing execution of the corresponding sets of task instructions. The vehicle assignments complete the sets of task instructions included in the work plans. The vehicle assignments provide completed work plans to report data collection information obtained from executing the sets of task instructions to the work order executor 161. In some examples, the completed work plans include performance data and/or task data. For example, the performance data includes a time duration (e.g., twenty minutes) for a vehicle assignment to complete the set of task instructions included in a work plan. For example, the task data includes data collected (e.g., product stock levels, product prices, planogram compliance of stores and/or products, location of products, product damage in stores) by the vehicle assignment based on the set task instructions. Thus, the work plan generator 162 forms a means for retrieving one or more work plans and/or a means for facilitating execution of the work plans to identify at least one of a product stock level, product price, planogram compliance of product, or a location of product.

In some examples, the vehicle metrics generator 164 utilizes the performance data and/or task data to calculate an accuracy value, a compliance value, and/or an efficiency value. The accuracy value may be based on whether the collected task data is accurate relative to the actual information. For instance, the task data may be inaccurate when the task data is not within a plausible range (e.g., a potato costing $0.50 is recorded to cost $500). The task data collected by a vehicle assignment may be reviewed by the vehicle metrics generator 164 for errors, alterations, etc. through any accuracy determination method, and the accuracy value may be represented as a percentage (e.g., 80% accuracy value). In other examples, the task data may indicate a stock value that is drastically different than the value of stock (e.g., number of cereal boxes on a shelf, etc.) that is actually present (e.g., 3 boxes of cereal are present, but the task data estimates 300 boxes). In such circumstances, vehicle metrics generator 164 may determine an accuracy value for that case.

The compliance value may be based on whether the vehicle assignment was compliant by following the set of task instructions. For instance, the vehicle assignment may be determined to be not compliant when the task data determined does not correspond to the set of assigned task instructions (e.g., the set of task instructions request a location of hats in a store and the task data includes a location of shorts in the store). For example, the task data may be reviewed by the vehicle metrics generator 164 to determine whether the data collected was instructed by the set of task instructions through any compliance determination method, and the compliance value may be represented as a percentage (e.g., 95% compliance value).

The efficiency value may be based on comparing (a) a target completion time of the task instructions and (b) a completion time of the task instructions by the vehicle assignment. For example, the completion time may be compared to the target completion time by the vehicle metrics generator 164 through any efficiency determination method, and the efficiency value may be represented as a percentage (e.g., 60% efficiency value). For instance, if a target completing of time for a set of task instructions is for example 15 minutes but the vehicle assignment completed the task instructions in two hours, the vehicle metrics generator 164 may determine a lower efficiency value (e.g., 15% efficiency) than if the vehicle assignment took 23 minutes to complete the task instructions (e.g., a 93% efficiency).

The vehicle metrics generator 164 may generate a set of updated vehicle metrics instructions based on the performance data and send the updated vehicle metrics instructions to the gamification system 140. In some examples, an updated vehicle metrics instruction includes the accuracy value, the compliance value, and/or the efficiency value associated with completed work plan executed by the vehicle assignment. The output handler 195 of the gamification system 140 may receive the updated vehicle metrics instruction and update the vehicle metrics corresponding to the vehicle assignment included in the memory 198 of the gamification system 140. For example, the output handler 195 stores new vehicle metrics to the memory 198 based on the information included in the updated vehicle metrics instruction and the current vehicle metrics (e.g., a unitless ratio of 2:3:5) stored in the memory 198 corresponding to the vehicle assignment. As a result, the updated vehicle metrics may indicate that a particular vehicle assignment should be adjusted (e.g., replace a human vehicle with a drone, etc.) if a low accuracy level (e.g., below a threshold) is identified, for example. In other examples, the vehicle metrics generator 164 uses the updated vehicle metrics to adjust parameters of subsequent work orders and/or subsequent vehicle assignments or generate new work plans. Thus, the vehicle metrics generator 164 forms a means for updating vehicle metrics associated vehicle assignments to facilitate execution of subsequent work plans by the vehicle assignments.

In some examples, the complete work order generator 165 generates a completed work order which includes information requested in the work order (e.g., task instructions) from the work orders and packets pool 156. The completed work order is generated based on the completed work plans provided by the vehicle assignments upon completion of the work plans. The completed work order may include the performance data, the task data, the accuracy values, the compliance values, and/or the efficiency values. Additionally, the completed work order may include the work packet identifier provided in the work order and any other information. The complete work order generator 165 may send the completed work order to the complete work orders and packets pool 166.

In some examples, a client work order delivery executor 170 from the set of client work order delivery executors accesses a completed work packet from the complete work orders and packets pool 166. The completed work packet includes the information requested in the work packets (e.g., task instructions), which may have been obtained from one or more completed work orders. For example, the client work order delivery executor 170 may obtain (e.g., receive or retrieve) the completed work packet including one or more completed work orders in response to the one or more completed work orders provided to the complete work orders and packets pool 166.

In some examples, the client work order delivery executor 170 generates a client report for the client engine 120. The client report may include information based on the completed work packet (e.g., the performance data, the task data, the accuracy values, the compliance values, and/or the efficiency values from the work plans), the vehicle allocation used for the completed work orders, and/or the work packet identifier. The client report may be sent to the client engine 120. The client engine 120 may send work packet feedback based on the client report. For example, the client report requests the client engine 120 to rate the work packet on a scale from 0-10 (the rating options vary from 0 indicative of least satisfaction to 10 indicative of greatest satisfaction by increments of 1) as client feedback. The client work order delivery executor 170 may send work packet feedback instructions to update the customer ratings system 125. For example, the work packet feedback instructions may include the client feedback along with the vehicle allocation, the client identifier, task instructions, and/or the at least one target market.

While an example manner of implementing the example data collection system 100 of FIG. 1 is illustrated in FIG. 1, one or more of the elements, processes and/or devices illustrated in FIG. 1 may be combined, divided, re-arranged, omitted, eliminated and/or implemented in any other way. Further, the work order planning system 105, the work order execution system 110, the client work order delivery system 115, the client engine 120, the customers rating system 125, the client service agreement system 130, the data collection tracking system 135, the gamification system 140, and/or, more generally, the example data collection system 100 of FIG. 1 may be implemented by hardware, software, firmware and/or any combination of hardware, software and/or firmware. Thus, for example, any of the work order planning system 105, the work order execution system 110, the client work order delivery system 115, the client engine 120, the customers rating system 125, the client service agreement system, the data collection tracking system 135, the gamification system 140, and/or, more generally, the example data collection system 100 of FIG. 1 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the work order planning system 105, the work order execution system 110, the client work order delivery system 115, the client engine 120, the customers rating system 125, the client service agreement system, the data collection tracking system 135, the gamification system 140, and/or, more generally, the example data collection system 100 of FIG. 1 is/are hereby expressly defined to include a non-transitory computer readable storage device or storage disk such as a memory, a digital versatile disk (DVD), a compact disk (CD), a Blu-ray disk, etc. including the software and/or firmware. Further still, the example data collection system 100 of FIG. 1 may include one or more elements, processes and/or devices in addition to, or instead of, those illustrated in FIG. 1, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

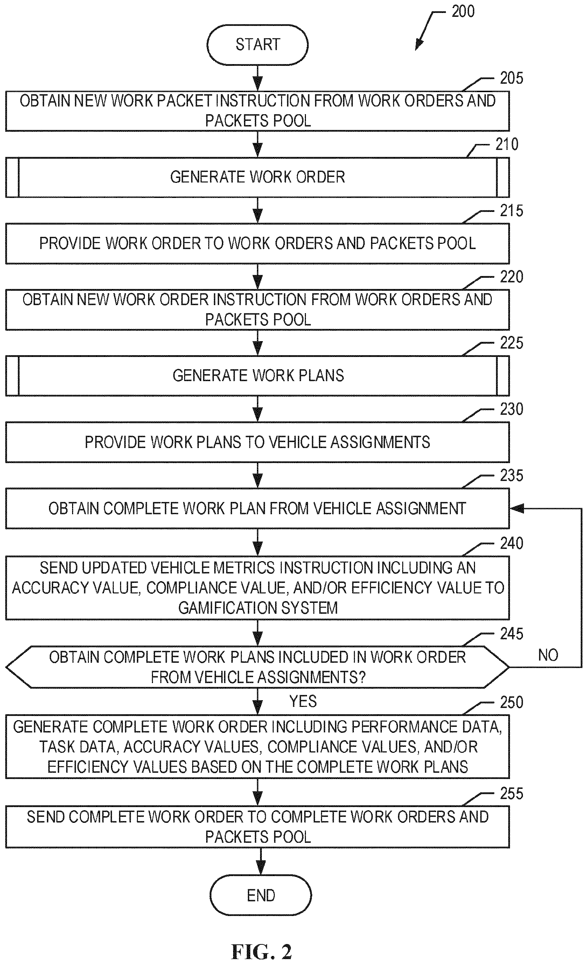

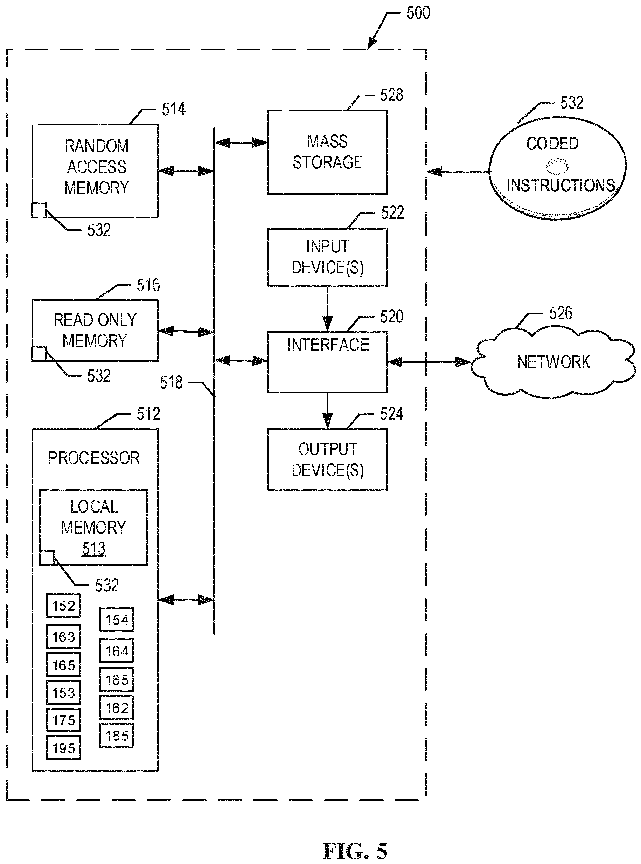

Flowcharts representative of example hardware logic, machine readable instructions, hardware implemented state machines, and/or any combination thereof for implementing the example data collection system 100 of FIG. 1 are shown in FIGS. 2-4. The machine readable instructions may be one or more executable programs or portion(s) of an executable program for execution by a computer processor and/or processor circuitry, such as the processor 512 shown in the example processor platform 500 discussed below in connection with FIG. 5. The program(s) may be embodied in software stored on a non-transitory computer readable storage medium such as a CD-ROM, a floppy disk, a hard drive, a DVD, a Blu-ray disk, or a memory associated with the processor 512, but the entire program and/or parts thereof could alternatively be executed by a device other than the processor 512 and/or embodied in firmware or dedicated hardware. Further, although the example program(s) is/are described with reference to the flowchart illustrated in FIGS. 2-4, many other methods of implementing the example data collection system 100 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 2-4 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 2 is a flowchart representative of an example process 200 that may be performed using machine-readable instructions that may be executed and/or hardware configured to implement the example data collection system 100 of FIG. 1. As disclosed herein, the work orders and packets pool 156 includes work packets generated by the work packet generator 145. The work packets are generated based on a client request such as, for example, gathering data regarding product stock levels, product prices, planogram compliance of stores and/or products (e.g., shelf location, inaccurate shelf tags), location of products, product damage in stores, etc. A work packet may include a client identifier (e.g., client code), work packet identifier, the task instructions, the at least one target market, and/or the additional service level agreement. At block 205, the example process 200 of FIG. 2 begins, at which the work order planner 151 obtains a new work packet instruction from the work orders and packets pool 156. The new work packet instruction may notify the output handler 153 a work packet is available in the work orders and packets pool 156. Alternatively, the work order planner 151 may periodically check the work orders and packets pool 156 for work packets and/or the new work packet instruction is received from any other element.

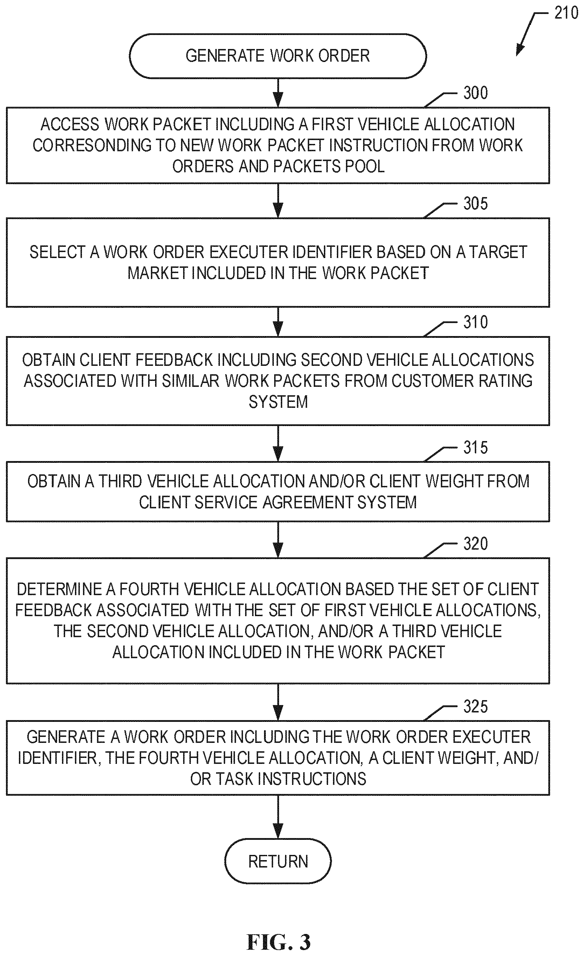

At block 210, the work order planner 151 generates a work order. The work order is generated to provide work order executor instructions for carrying out task instructions defined in the work packet. The work order executors may be an entity such as, for example, a company that includes vehicles (e.g., auditors, drones, robots, etc.) to perform data collection in a location associated with the target market. Details to generate the work order are disclosed in connection with FIG. 3. At block 215, the output handler 153 of the work order planner 151 provides the work order to the work orders and packets pool 156.

At block 220, the work order executor 161 obtains a new work order instruction from the work orders and packets pool 156. The new work order instruction may notify the output handler 162 a work order is available in the work orders and packets pool 156. Alternatively, the work order executor 161 may periodically check the work orders and packets pool 156 for work orders including the work order executor identifier corresponding to the work order executor 161 and/or the new work order instruction is received from any other element.

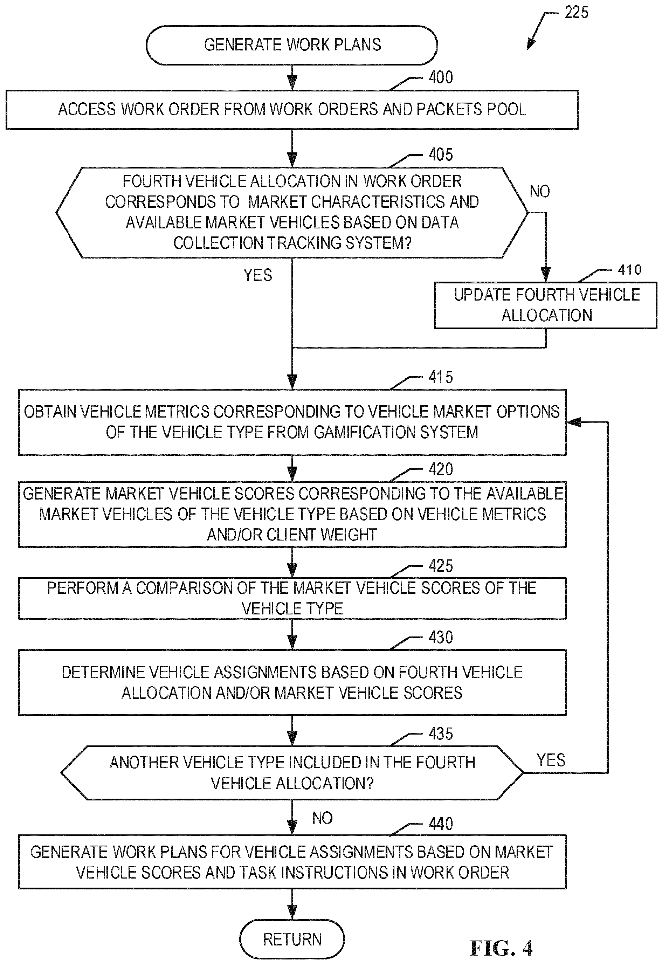

At block 225, the work order executor 161 generates one or more work plans. The work plan(s) include sets of task instructions to be executed by vehicle assignments. Details to generate work plans are disclosed in connection with FIG. 4. At block 230, the output handler 162 provides the work plans to vehicle assignments. The work plans are provided to the vehicle assignments to execute the corresponding sets of task instructions.

At block 235, the work order executor 161 obtains a completed work plan from a vehicle assignment. The complete work plan includes the performance data and/or task data from the vehicle assignment executing the set of task instructions included in the work plan. For example, the performance data includes a time duration (e.g., twenty minutes) for a vehicle assignment to complete the set of task instructions included in a work plan. For example, the task data includes data collected (e.g., product stock levels, product prices, planogram compliance of stores and/or products, location of products, product damage in stores) by the vehicle assignment based on the set of task instructions.

At block 240, the vehicle metrics generator 164 sends an updated vehicle metrics instruction including an accuracy value, a compliance value, and/or an efficiency value to the gamification system 140. The accuracy value, the compliance value, and/or the efficiency value is based on the performance data and/or task data included in the completed work plan. The accuracy value may be based on whether the task data collected is accurate relative to the actual data. The compliance value may be based on whether the vehicle assignment was compliant by following the set of task instructions. The efficiency value may be based on comparing (a) a target completion time of the task instructions and (b) a completion time of the task instructions by the vehicle assignment. As such, the gamification system 140 updates vehicle metrics corresponding to the performance of the vehicle assignment based on the generated updated vehicle metrics instruction to facilitate subsequent execution of work plans by corresponding vehicle assignments using the generated metrics results.

At block 245, the work order executor 161 determines whether the work plans included in the work order have been obtained from the vehicle assignments. For example, the work order included three work plans provided to three vehicle assignments. As a result, the work order executor 161 may determine whether three work plans have been received.

If the work order executor 161 determines the work plans in the work order have not been received from the vehicle assignments (e.g., block 245 returns a result of "NO"), the work order executor 161 returns to block 235. If the work order executor 161 determines the work plans in the work order have been received from the vehicle assignments (e.g., block 245 returns a result of "YES"), the work order executor 161 continues to block 250.

At block 250, the complete work order generator 165 generates a completed work order including performance data, task data, accuracy values, compliance values, and/or efficiency values based on the completed work plans. The information included in the completed work order is information requested in the work order (e.g., task instructions) from the work orders and packets pool 156.

At block 255, the output handler 162 of the work order executor 161 sends the completed work order to the complete work orders and packets pool 166. The completed work order may be utilized by one of the client work order delivery executor 170 to provide the information requested in the work order (e.g., task instructions) to the client.

The example process 200 of FIG. 2 terminates.

FIG. 3 is a flowchart representative of the example process 210 of FIG. 2 to generate a work order by the work order planner 151. At block 300, the example process 210 of FIG. 3 begins, at which the work order planner 151 accesses a work packet including a first vehicle allocation corresponding to a new work packet instruction from the work orders and packets pool 156. The first vehicle allocation may be included in the work packet because the client has a preference on the vehicle types performing the data collection for the work packet. Alternatively, no vehicle allocation may be included in the work packet in cases where the client does not have a preference on the vehicle types performing the data collection for the work packet.

At block 305, the work order generator 154 selects a work order executor identifier based on a target market included in the work packet. The work order executor identifier may be a work order executor code, a unique number, etc. associated with a work order executor. For example, the work order executor identifier is from a set of work order executor identifiers stored in the memory 155 of the work order planner 151, the set of work order executor identifiers corresponding to the set of work order executors 160 to perform data collection activities.

At block 310, the vehicle allocation generator 152 obtains the client feedback including a second vehicle allocation associated with similar completed work packets from the customer ratings system 125. For example, a similar completed work packet may include the same client identifier, same task instructions, and/or the same target market, including a second vehicle allocation with a feedback rating. As such, the client feedback is determined from work orders previously planned and executed (e.g., historical data corresponding to the work orders). In other examples, the client feedback is manual feedback received from the client, such as, for example a feedback rating or score. Alternatively, no client feedback including second vehicle allocations corresponding to similar complete work packets may be available in cases where there are no similar complete work packets (e.g., same client identifier, same task instructions, and/or the at least one same target market).

At block 315, the vehicle allocation generator 152 obtains a third vehicle allocation and/or a client weight from the client service agreement system 130. For example, the additional service level agreement in the work packet may not include resource distribution preferences (e.g., the first vehicle allocation) and/or client weight. In such circumstances, the client agreement information request may include a request for the third vehicle allocation and/or the client weight. In some examples, the client service agreement system 130 does not include the third vehicle allocation in cases where the client does not have a default preference on the vehicle types. Additionally, the client service agreement system 130 may not include the client weight in cases where client does not have a default preference on the vehicle metrics of vehicles performing the data collection for the work packet.

At block 320, the vehicle allocation generator 152 determines a new or updated (e.g., a fourth) vehicle allocation based on the first vehicle allocation included in the work packet, the client feedback including the second vehicle allocations from the customers ratings system 125, the third vehicle allocation from the client service agreement system 130. Alternatively, in a case with no vehicle allocation information, the fourth vehicle allocation may not be determined.

At block 325, the work order generator 154 may generate a work order including the work order executor identifier, the fourth vehicle allocation, the client weight, and/or task instructions.

The example process 220 of FIG. 3 then terminates and continues to block 230 of FIG. 2.

FIG. 4 is a flowchart representative of the example process 225 of FIG. 2 to generate work plans by the work order executor 161. At block 400, the example process 225 of FIG. 4 begins, at which the output handler 162 of the work order executor 161 accesses a work order from the work orders and packets pool 156.

At block 405, the work plan generator 163 determines whether the fourth vehicle allocation in the work order corresponds to market characteristics and available market vehicles based on the data collection tracking system 135. Alternatively, the fourth vehicle allocation may not be available, in which the work plan generator 163 continues to block 415. The market characteristics may include shelf height, aisle width, etc. of at least one store associated with the target market included in the work order. The available market vehicles are market vehicles available to perform task instructions included in the work order for the work order executor 161.

If the work plan generator 163 determines the fourth vehicle allocation in the work order does correspond to market characteristics and available market vehicles from the data collection tracking system 135 (e.g., block 405 returns a result of "YES"), the work plan generator 163 continues to block 415.

At block 410, if the work plan generator 163 determines the fourth vehicle allocation in the work order does not correspond to market characteristics and available market vehicles from the data collection tracking system 135 (e.g., block 405 returns a result of "NO"), the work plan generator 163 updates the fourth vehicle allocation and continues to block 415. In some examples, the available market vehicles do not correspond to the fourth vehicle allocation included in the work order. For example, the fourth vehicle allocation included in the work order includes five auditors (e.g., personnel), whereas the available market vehicles include four auditors. As a result, the fourth vehicle allocation may be updated to include no more than four auditors based on the available vehicles. In some examples, the market characteristics of stores in the target market do not correspond to the fourth vehicle allocation. For example, the fourth vehicle allocation included in the work order includes only human type vehicles, whereas the market characteristics of a store associated with the target market has a high shelf. As a result, the fourth vehicle allocation may be updated to include vehicles of a drone type to easily collect data at the higher location in contrast to vehicles of a human type that may need to climb ladders.

At block 415, the work plan generator 163 obtains vehicle metrics corresponding to the available market vehicles of a vehicle type (e.g., a person, drone, or robot) from the gamification system 140. These vehicle metrics may be a unitless ratio for vehicle metrics performance such as, for example, quality metrics, efficiency metrics, and/or compliance metrics. For example, the vehicle metrics performance may be rated on a scale from 0-10 (e.g., the rating options vary from 0 indicative of least satisfactory performance to 10 indicative of greatest satisfactory performance by increments of 1), the vehicle metrics may be represented as a unitless ratio (quality metrics rating) : (efficiency metrics rating) : (compliance metrics rating), and the first vehicle metrics for a first vehicle may be provided as, for instance, 2:3:5.

At block 420, the work plan generator 163 generates market vehicle scores corresponding to the available market vehicles based on vehicle metrics and/or the client weight. In some examples, a decision matrix may calculate market vehicle scores. For example, a client weight is represented as a row (e.g., a row of digits 5,7,9) (described in connection with the client engine 120), the first vehicle metrics are represented as a column (e.g., a column of digits 2;3;5), and a first market vehicle score is produced by performing matrix multiplication of the client weight row by the vehicle metrics column (e.g., score of 76 ((5x2)+(7x3)+(9x5)=76)).

At block 425, the work plan generator 163 performs a comparison of the market vehicle scores of the vehicle type. For example, the work plan generator 163 compares a first market vehicle score of the vehicle type, a second market vehicle score of the vehicle type, a third market vehicle score of the vehicle type, etc. For instance, the work plan generator 163 may compare the market vehicle scores to determine which available market vehicles of the vehicle type have better (e.g., higher) market vehicle scores. As a result, the work plan generator 163 may rank the available market vehicles of the vehicle type from best (e.g., highest) market vehicle scores to worst (e.g., lowest) market vehicle scores.

At block 430, the work plan generator 163 determines vehicle assignments based on the fourth vehicle allocation and/or the market vehicle scores. For instance, first available market vehicles of the vehicle type may be selected as vehicle assignments, rather than second available market vehicles of the vehicle type because the first available market vehicles have better (e.g., higher) market vehicle scores than the market vehicle scores of the second available market vehicles. Alternatively, in cases where quantity of available market vehicles of the vehicle type are equal to quantity of the vehicle type in the new vehicle allocation, the available market vehicles of the vehicle type are all selected as vehicle assignments.

At block 435, the work plan generator 163 determines whether another vehicle type is included in the fourth vehicle allocation.

If the work plan generator 163 determines another vehicle type is included in the fourth vehicle allocation (e.g., block 435 returns a result of "YES"), the work plan generator 163 returns to block 415. For example, vehicle assignments have been recorded for vehicles of a robot type and a human type, yet the fourth vehicle allocation includes robot type, human type, and drone type. As a result, vehicle assignments for the drone type may need to be executed.

At block 440, if the work plan generator 163 determines another vehicle type is not included in the fourth vehicle allocation (e.g., block 435 returns a result of "NO"), the work plan generator 163 generates work plans for vehicle assignments based on market vehicle scores and task instructions in the work order. For instance, the better (e.g., relatively higher) market vehicle score indicates the first vehicle assignment is to be granted more business (e.g., more business providing more compensation for the first vehicle assignment) from the work order executor 161 for relatively better performance than other vehicle assignment options. The task instructions are divided into sets of task instructions to be included in corresponding work plans associated with vehicle assignments. The example process 225 of FIG. 4 then terminates and continues to block 230 of FIG. 2.

FIG. 5 is a block diagram of an example processor platform 500 structured to execute the instructions of FIGS. 2-4 to implement the example data collection system 100 of FIG. 1. The processor platform 500 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 500 of the illustrated example includes a processor 512. The processor 512 of the illustrated example is hardware. For example, the processor 512 can be implemented by one or more integrated circuits, logic circuits, microprocessors, GPUs, DSPs, or controllers from any desired family or manufacturer. The hardware processor may be a semiconductor based (e.g., silicon based) device. In this example, the vehicle allocation generator 152, the work order generator 154, the work plan generator 163, the vehicle metrics generator 164, the complete work order generator 165, and/or the output handlers 153, 162, 175, 185, 195

The processor 512 of the illustrated example includes a local memory 513 (e.g., a cache). The processor 512 of the illustrated example is in communication with a main memory including a volatile memory 514 and a non-volatile memory 516 via a bus 518. The volatile memory 514 may be implemented by Synchronous Dynamic Random Access Memory (SDRAM), Dynamic Random Access Memory (DRAM), RAMBUS@ Dynamic Random Access Memory (RDRAM@) and/or any other type of random access memory device. The non-volatile memory 516 may be implemented by flash memory and/or any other desired type of memory device. Access to the main memory 514, 516 is controlled by a memory controller.

The processor platform 500 of the illustrated example also includes an interface circuit 520. The interface circuit 520 may be implemented by any type of interface standard, such as an Ethernet interface, a universal serial bus (USB), a Bluetooth@ interface, a near field communication (NFC) interface, and/or a PCI express interface.

In the illustrated example, one or more input devices 522 are connected to the interface circuit 520. The input device(s) 522 permit(s) a user to enter data and/or commands into the processor 512. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 524 are also connected to the interface circuit 520 of the illustrated example. The output devices 524 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 520 of the illustrated example, thus, typically includes a graphics driver card, a graphics driver chip and/or a graphics driver processor.

The interface circuit 520 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 526. The communication can be via, for example, an Ethernet connection, a digital subscriber line (DSL) connection, a telephone line connection, a coaxial cable system, a satellite system, a line-of-site wireless system, a cellular telephone system, etc.

The processor platform 500 of the illustrated example also includes one or more mass storage devices 528 for storing software and/or data. Examples of such mass storage devices 528 include floppy disk drives, hard drive disks, compact disk drives, Blu-ray disk drives, redundant array of independent disks (RAID) systems, and digital versatile disk (DVD) drives.

The machine executable instructions 532 of FIGS. 2-4 may be stored in the mass storage device 528, in the volatile memory 514, in the non-volatile memory 516, and/or on a removable non-transitory computer readable storage medium such as a CD or DVD.

From the foregoing, it will be appreciated that example methods, apparatus and articles of manufacture have been disclosed that improve efficiency and accuracy at which data is collected to reduce and/or otherwise minimize computing resource waste. The disclosed methods, apparatus and articles of manufacture improve the efficiency of using a computing device by optimizing resource allocation, for instance, data collection vehicles to perform a set of tasks. For example, previous systems and techniques utilized data collection vehicles without considering the abilities of particular vehicle types (e.g., persons, drones, etc.) nor respective performance scores. As such, the examples disclosed herein utilize additional resources such as, client feedback, client preferences, previously completed tasks, and/or client service agreements to improve allocations of resources and data collection vehicles. For example, in instances when current resources (e.g., vehicle assignments) fail to complete a task properly, (e.g., with a degree of efficiency or accuracy meeting a threshold) resource allocation can be updated based on one or more performance metrics and/or performance history to improve efficiency of data collection, and reduce costs associated with data collection (e.g., compensating injured workers, paying for auditors when drones and/or robots may be better used for collecting data, etc.) and/or increase accuracy at which data is collected (e.g., reducing human error). Disclosed methods, apparatus and articles of manufacture are accordingly directed to one or more improvement(s) in the functioning of a computer.

Example methods, systems, and apparatus to plan multi-vehicle data collection have been disclosed herein. The following paragraphs provide various examples and example combinations of the examples disclosed herein.

Example 1 is a system including a work plan generator to generate market vehicle scores corresponding to available market vehicles, the market vehicle scores based on at least one client weight and at least one vehicle metric, perform a comparison of the market vehicle scores associated with vehicle types to determine a first vehicle assignment and a second vehicle assignment, the first vehicle assignment associated with a first vehicle type, the second vehicle assignment associated with a second vehicle type, and generate first work plans, the first work plans corresponding to (a) a sequence of tasks and (b) a set of corresponding vehicles to execute the sequence of tasks, and a vehicle metrics generator to update vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

Example 2 includes the system of Example 1, further including a first output handler to retrieve the first and second work plans, and facilitate execution of the first and second work plans to identify at least one of a product stock level, product price, planogram compliance of product, or a location of product.

Example 3 includes the system of Examples 1-2, further including a second output handler to identify a status associated with a market vehicle, and facilitates a change in the first or second vehicle assignment based on an availability of the market vehicle.

Example 4 includes the system of Examples 1-3, further including a client engine to determine a request to complete one or more tasks, the request corresponding to a client, identify a service level agreement corresponding to the client, the service level agreement including a client weight indicative of an importance of a metric relative to the client, the client weight a ratio based on at least two of an efficiency metric, a quality metric, or a compliance metric, and facilitate completion of the one or more tasks corresponding to the client based on a determination of the client weight.

Example 5 includes the system of Examples 1-4, wherein the work plan generator is to generate the market vehicle scores by multiplying a first vector corresponding to client weight with a second vector corresponding to vehicle metrics.

Example 6 includes the system of Examples 1-5, wherein the work plan generator is to determine the first and second vehicle assignment based on at least one of a vehicle allocation, one or more market characteristics or one of the available market vehicles.

Example 7 includes the system of Examples 1-6, wherein the vehicle allocation is a first vehicle allocation including a first vehicle quantity corresponding to a first vehicle type and a second vehicle quantity corresponding to a second vehicle type.

Example 8 includes the system of Examples 1-7, wherein the work plan generator is to assign a first plurality of task instructions to the first vehicle assignment and a second plurality of task instructions to the second vehicle assignment, the first plurality of task instructions greater than the second plurality of task instructions, the assignment based on the first vehicle assignment corresponding to a first market vehicle score and the second vehicle assignment corresponding to a second market vehicle score, the first market vehicle score higher than the second market vehicle score.

Example 9 is an apparatus including at least one memory, instructions, and at least one processor to execute the instructions to generate market vehicle scores corresponding to available market vehicles, the market vehicle scores based on at least one client weight and at least one vehicle metric, perform a comparison of the market vehicle scores associated with vehicle types to determine a first vehicle assignment and a second vehicle assignment, the first vehicle assignment associated with a first vehicle type, the second vehicle assignment associated with a second vehicle type, generate first work plans, the first work plans corresponding to (a) a sequence of tasks and (b) a set of corresponding vehicles to execute the sequence of tasks, and update vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

Example 10 includes the apparatus of Example 9, wherein the processor is to further execute the instructions to retrieve the first and second work plans, and facilitate execution of the first and second work plans to identify at least one of a product stock level, product price, planogram compliance of product, or a location of product.

Example 11 includes the apparatus of Examples 9-10, wherein the processor is to further execute the instructions to identify a status associated with a market vehicle, and facilitates a change in the first or second vehicle assignment based on an availability of the market vehicle.

Example 12 includes the apparatus of Examples 9-11, wherein the processor is to further execute the instructions to determine a request to complete one or more tasks, the request corresponding to a client, identify a service level agreement corresponding to the client, the service level agreement including a client weight indicative of an importance of a metric relative to the client, the client weight a ratio based on at least two of an efficiency metric, a quality metric, or a compliance metric, and facilitate completion of the one or more tasks corresponding to the client based on a determination of the client weight.

Example 13 includes the apparatus of Examples 9-12, wherein the processor is to further execute the instructions to generate the market vehicle scores by multiplying a first vector corresponding to client weight with a second vector corresponding to vehicle metrics.

Example 14 includes the apparatus of Examples 9-13, wherein the processor is to further execute the instructions to determine the first and second vehicle assignment based on at least one of a vehicle allocation, one or more market characteristics or one of the available market vehicles.

Example 15 includes the apparatus of Examples 9-14, wherein the vehicle allocation is a first vehicle allocation including a first vehicle quantity corresponding to a first vehicle type and a second vehicle quantity corresponding to a second vehicle type.

Example 16 includes the apparatus of Examples 9-15, wherein the processor is to further execute the instructions to assign a first plurality of task instructions to the first vehicle assignment and a second plurality of task instructions to the second vehicle assignment, the first plurality of task instructions greater than the second plurality of task instructions, the assignment based on the first vehicle assignment corresponding to a first market vehicle score and the second vehicle assignment corresponding to a second market vehicle score, the first market vehicle score higher than the second market vehicle score.

Example 17 is a non-transitory computer readable media comprising instructions, which, when executed by one or more processors cause the one or more processors to generate market vehicle scores corresponding to available market vehicles, the market vehicle scores based on at least one client weight and at least one vehicle metric, perform a comparison of the market vehicle scores associated with vehicle types to determine a first vehicle assignment and a second vehicle assignment, the first vehicle assignment associated with a first vehicle type, the second vehicle assignment associated with a second vehicle type, generate first work plans, the first work plans corresponding to (a) a sequence of tasks and (b) a set of corresponding vehicles to execute the sequence of tasks, and update vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

Example 18 includes the instructions of Example 17, further including instructions to retrieve the first and second work plans, and facilitate execution of the first and second work plans to identify at least one of a product stock level, product price, planogram compliance of product, or a location of product.

Example 19 includes the instructions of Examples 17 and 18, further including instructions to identify a status associated with a market vehicle, and facilitates a change in the first or second vehicle assignment based on an availability of the market vehicle.

Example 20 includes the instructions of Examples 17-19, further including instructions to determine a request to complete one or more tasks, the request corresponding to a client, identify a service level agreement corresponding to the client, the service level agreement including a client weight indicative of an importance of a metric relative to the client, the client weight a ratio based on at least two of an efficiency metric, a quality metric, or a compliance metric, and facilitate completion of the one or more tasks corresponding to the client based on a determination of the client weight.

Example 21 includes the instructions of Examples 17-20, further including instructions to generate the market vehicle scores by multiplying a first vector corresponding to client weight with a second vector corresponding to vehicle metrics.

Example 22 includes the instructions of Examples 17-21, further including instructions to determine the first and second vehicle assignment based on at least one of a vehicle allocation, one or more market characteristics or one of the available market vehicles.

Example 23 includes the instructions of Examples 17-22, wherein the vehicle allocation is a first vehicle allocation including a first vehicle quantity corresponding to a first vehicle type and a second vehicle quantity corresponding to a second vehicle type.

Example 24 includes the instructions of Examples 17-23, further including instructions to assign a first plurality of task instructions to the first vehicle assignment and a second plurality of task instructions to the second vehicle assignment, the first plurality of task instructions greater than the second plurality of task instructions, the assignment based on the first vehicle assignment corresponding to a first market vehicle score and the second vehicle assignment corresponding to a second market vehicle score, the first market vehicle score higher than the second market vehicle score.

Example 25 is a method including generating market vehicle scores corresponding to available market vehicles, the market vehicle scores based on at least one client weight and at least one vehicle metric, performing a comparison of the market vehicle scores associated with vehicle types to determine a first vehicle assignment and a second vehicle assignment, the first vehicle assignment associated with a first vehicle type, the second vehicle assignment associated with a second vehicle type, generating first work plans, the first work plans corresponding to (a) a sequence of tasks and (b) a set of corresponding vehicles to execute the sequence of tasks, and updating vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

Example 26 includes the method of Example 25, and further includes retrieving the first and second work plans, and facilitating execution of the first and second work plans to identify at least one of a product stock level, product price, planogram compliance of product, or a location of product.

Example 27 includes the method of Examples 25 and 26, and further includes identifying a status associated with a market vehicle, and facilitating a change in the first or second vehicle assignment based on an availability of the market vehicle.

Example 28 includes the method of Examples 25-27, and further includes determining a request to complete one or more tasks, the request corresponding to a client, identifying a service level agreement corresponding to the client, the service level agreement including a client weight indicative of an importance of a metric relative to the client, the client weight a ratio based on at least two of an efficiency metric, a quality metric, or a compliance metric, and facilitating completion of the one or more tasks corresponding to the client based on a determination of the client weight.

Example 29 includes the method of Examples 25-28, and further includes generating the market vehicle scores by multiplying a first vector corresponding to client weight with a second vector corresponding to vehicle metrics.

Example 30 includes the method of Examples 25-29, and further includes determining the first and second vehicle assignment based on at least one of a vehicle allocation, one or more market characteristics or one of the available market vehicles.

Example 31 includes the method of Examples 25-30, wherein the vehicle allocation is a first vehicle allocation including a first vehicle quantity corresponding to a first vehicle type and a second vehicle quantity corresponding to a second vehicle type.

Example 32 includes the method of Examples 25-31, and further includes assigning a first plurality of task instructions to the first vehicle assignment and a second plurality of task instructions to the second vehicle assignment, the first plurality of task instructions greater than the second plurality of task instructions, the assignment based on the first vehicle assignment corresponding to a first market vehicle score and the second vehicle assignment corresponding to a second market vehicle score, the first market vehicle score higher than the second market vehicle score.

Example 33 is an apparatus including means for generating, the means for generating to generate market vehicle scores corresponding to available market vehicles, the market vehicle scores based on at least one client weight and at least one vehicle metric, and perform a comparison of the market vehicle scores associated with vehicle types to determine a first vehicle assignment and a second vehicle assignment, the first vehicle assignment associated with a first vehicle type, the second vehicle assignment associated with a second vehicle type, and generate first work plans, the first work plans corresponding to (a) a sequence of tasks and (b) a set of corresponding vehicles to execute the sequence of tasks, and means for updating, the means for updating to update vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

Example 34 includes the apparatus of Example 33, and further includes a first means for handling, the first means for handling to, retrieve the first and second work plans, and facilitate execution of the first and second work plans to identify at least one of a product stock level, product price, planogram compliance of product, or a location of product.

Example 35 includes the apparatus of Examples 33 and 34, and further includes a second means for handling, the second means for handling to identify a status associated with a market vehicle, and facilitate a change in the first or second vehicle assignment based on an availability of the market vehicle.

Example 36 includes the apparatus of Examples 33-35, and further includes a client request processing means to determine a request to complete one or more tasks, the request corresponding to a client, identify a service level agreement corresponding to the client, the service level agreement including a client weight indicative of an importance of a metric relative to the client, the client weight a ratio based on at least two of an efficiency metric, a quality metric, or a compliance metric, and facilitate completion of the one or more tasks corresponding to the client based on a determination of the client weight.

Example 37 includes the apparatus of Examples 33-36, wherein the means for generating is to generate the market vehicle scores by multiplying a first vector corresponding to client weight with a second vector corresponding to vehicle metrics.

Example 38 includes the apparatus of Examples 33-37, wherein the means for generating is to determine the first and second vehicle assignment based on at least one of a vehicle allocation, one or more market characteristics or one of the available market vehicles.

Example 39 includes the apparatus of Examples 33-38, wherein the vehicle allocation is a first vehicle allocation including a first vehicle quantity corresponding to a first vehicle type and a second vehicle quantity corresponding to a second vehicle type.

Example 40 includes the apparatus of Examples 33-39, wherein the means for generating is to assign a first plurality of task instructions to the first vehicle assignment and a second plurality of task instructions to the second vehicle assignment, the first plurality of task instructions greater than the second plurality of task instructions, the assignment based on the first vehicle assignment corresponding to a first market vehicle score and the second vehicle assignment corresponding to a second market vehicle score, the first market vehicle score higher than the second market vehicle score.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

## Claims

1. A system comprising:
work plan generator circuitry to:
generate market vehicle scores corresponding to available market vehicles, the market vehicle scores based on at least one client weight and at least one vehicle metric;
perform a comparison of the market vehicle scores associated with vehicle types to determine a first vehicle assignment and a second vehicle assignment, the first vehicle assignment associated with a first vehicle type, the second vehicle assignment associated with a second vehicle type; and
generate first work plans, the first work plans corresponding to (a) a sequence of tasks and (b) a set of corresponding vehicles to execute the sequence of tasks; and
vehicle metrics generator circuitry to update vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

2. The system of claim 1, further including first output handler circuitry to:
retrieve the first and second work plans; and
facilitate execution of the first and second work plans to identify at least one of a product stock level, product price, planogram compliance of product, or a location of product.

3. The system of claim 1, further including second output handler circuitry to:
identify a status associated with a market vehicle; and
facilitate a change in the first or second vehicle assignment based on an availability of the market vehicle.

4. The system of claim 1, further including client engine circuitry to:
determine a request to complete one or more tasks, the request corresponding to a client;
identify a service level agreement corresponding to the client, the service level agreement including a client weight indicative of an importance of a metric relative to the client, the client weight a ratio based on at least two of an efficiency metric, a quality metric, or a compliance metric; and
facilitate completion of the one or more tasks corresponding to the client based on a determination of the client weight.

5. The system of claim 1, wherein the work plan generator circuitry is to generate the market vehicle scores by multiplying a first vector corresponding to client weight with a second vector corresponding to vehicle metrics.

6. The system of claim 1, wherein the work plan generator circuitry is to determine the first and second vehicle assignment based on at least one of a vehicle allocation, one or more market characteristics or one of the available market vehicles.

7. A computer readable medium comprising instructions, which, when executed by one or more processors cause the one or more processors to:
generate market vehicle scores corresponding to available market vehicles, the market vehicle scores based on at least one client weight and at least one vehicle metric;
perform a comparison of the market vehicle scores associated with vehicle types to determine a first vehicle assignment and a second vehicle assignment, the first vehicle assignment associated with a first vehicle type, the second vehicle assignment associated with a second vehicle type;
generate first work plans, the first work plans corresponding to (a) a sequence of tasks and (b) a set of corresponding vehicles to execute the sequence of tasks; and
update vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

8. The computer readable medium of claim 7, wherein the instructions, when executed, cause the one or more processors to:
retrieve the first and second work plans; and
facilitate execution of the first and second work plans to identify at least one of a product stock level, product price, planogram compliance of product, or a location of product.

9. The computer readable medium of claim 7, wherein the instructions, when executed, cause the one or more processors to:
identify a status associated with a market vehicle; and
facilitate a change in the first or second vehicle assignment based on an availability of the market vehicle.

10. The computer readable medium of claim 7, wherein the instructions, when executed, cause the one or more processors to:
determine a request to complete one or more tasks, the request corresponding to a client;
identify a service level agreement corresponding to the client, the service level agreement including a client weight indicative of an importance of a metric relative to the client, the client weight a ratio based on at least two of an efficiency metric, a quality metric, or a compliance metric; and
facilitate completion of the one or more tasks corresponding to the client based on a determination of the client weight.

11. The computer readable medium of claim 7, wherein the instructions, when executed, cause the one or more processors to assign a first plurality of task instructions to the first vehicle assignment and a second plurality of task instructions to the second vehicle assignment, the first plurality of task instructions greater than the second plurality of task instructions, the assignment based on the first vehicle assignment corresponding to a first market vehicle score and the second vehicle assignment corresponding to a second market vehicle score, the first market vehicle score higher than the second market vehicle score.

12. A method comprising:
generating market vehicle scores corresponding to available market vehicles, the market vehicle scores based on at least one client weight and at least one vehicle metric;
performing a comparison of the market vehicle scores associated with vehicle types to determine a first vehicle assignment and a second vehicle assignment, the first vehicle assignment associated with a first vehicle type, the second vehicle assignment associated with a second vehicle type;
generating first work plans, the first work plans corresponding to (a) a sequence of tasks and (b) a set of corresponding vehicles to execute the sequence of tasks; and
updating vehicle metrics instructions associated with the first vehicle assignment and the second vehicle assignment to facilitate subsequent execution of second work plans, a first subset of the second work plans corresponding to first ones of the sequence of tasks executed by the first vehicle assignment and a second subset of the second work plans corresponding to second ones of the sequence of tasks executed by the second vehicle assignment.

13. The method of claim 12, further including:
retrieving the first and second work plans; and
facilitating execution of the first and second work plans to identify at least one of a product stock level, product price, planogram compliance of product, or a location of product.

14. The method of claim 12, further including:
identifying a status associated with a market vehicle; and
facilitating a change in the first or second vehicle assignment based on an availability of the market vehicle.

15. The method of claim 12, further including:
determining a request to complete one or more tasks, the request corresponding to a client;
identifying a service level agreement corresponding to the client, the service level agreement including a client weight indicative of an importance of a metric relative to the client, the client weight a ratio based on at least two of an efficiency metric, a quality metric, or a compliance metric; and
facilitating completion of the one or more tasks corresponding to the client based on a determination of the client weight.
